# DEMANDE DE BREVET EUROPEEN

(11) **EP 2 179 831 A1**
(43) Date de publication de la demande: **28.04.2010**
(21) Numéro de dépôt: 08167195.0
(22) Date de dépôt: 21.10.2008
(51) Int. Cl.: B29C 37/00, B65D 25/04, B65D 90/00, B65F 1/00, C02F 3/12

(54) **Cuve compartimentée**

(71) Demandeur: EPUR S.A., 4460 Grace-Hollogne (BE)
(72) Inventeur: Hartenstein, Marcel, 4122 Plainevaux (BE)
(74) Mandataire: Office Freylinger

(57) **Abrégé**

L'invention concerne une cuve compartimentée présentant des rainures de forme sensiblement en forme de V qui se rétrécissent vers le fond de la cuve. Une ou plusieurs cloisons présentant des bords latéraux de forme complémentaire aux rainures peuvent s'emboîter dans ces rainures jusqu'au blocage des bords latéraux des cloisons dans les rainures, de sorte à obtenir une étanchéité automatique et instantanée entre la paroi de la cuve et les bords latéraux des cloisons. Ces cuves compartimentées peuvent être utilisées comme station d'épuration pour le traitement des eaux usées.

## Description

### Domaine technique

La présente invention concerne une méthode de compartimentation pour cuves et des cuves compartimentées utilisées notamment dans le domaine des stations d'épuration.

### Etat de la technique

L'épuration des eaux domestiques peut être réalisée grâce à des stations d'épuration qui comprennent généralement plusieurs cuves ou compartiments. L'eau passe successivement par les compartiments intégrant chacun une fonction différente, par exemple le dégraissage des eaux, la dégradation microbiologique, la décantation, etc.

Les stations d'épuration sont généralement fabriquées au départ d'une cuve en béton ou en matière synthétique standard du marché qui est adaptée en y installant d'abord chacune des cloisons en béton ou en matière synthétique séparant les différentes cloisons. Les différentes cloisons doivent ensuite être fixées dans la cuve et la pose de joints s'impose afin d'obtenir une étanchéité entre les différents compartiments.

Cette réalisation est relativement longue car l'opérateur doit d'abord verrouiller les différents compartiments dans la cuve, et une fois fixés procéder à la pose de joints.

Par ailleurs, l'opérateur s'expose à des risques lorsqu'il entre dans la cuve pour fixer les cloisons car les cloisons peuvent se renverser sur lui, ce qui est d'autant plus dangereux s'il s'agit de cloisons lourdes (en béton par exemple). Lors de la pose de joints, des cloisons mal fixées peuvent également se renverser sur lui et le blesser.

### Objet de l'invention

Un objet de la présente invention est par conséquent de proposer une cuve compartimentée, dont les cloisons une fois insérées permettent une étanchéité entre la paroi de la cuve et les bords latéraux des cloisons. Par ailleurs, l'équipement de ces cuves pour les transformer en station d'épuration devrait être non seulement facile et rapide, mais aussi réduire le risque d'accidents lors de l'assemblage.

Conformément à l'invention, cet objectif est atteint avec une cuve compartimentée selon la revendication 1.

### Description générale de l'invention

Afin de résoudre le problème mentionné ci-dessus, la présente invention propose une cuve compartimentée dont la paroi interne présente au moins deux rainures sensiblement en forme de V se rétrécissant vers le fond de la cuve. Ces rainures coopèrent avec une ou plusieurs cloisons présentant des bords latéraux de forme complémentaire aux rainures. De cette manière, les bords latéraux des cloisons peuvent s'emboîter dans les rainures jusqu'au blocage des bords latéraux dans ces rainures, de sorte à obtenir une étanchéité relative entre la paroi de la cuve et les cloisons.

Les avantages de la présente invention sont nombreux. L'intérêt premier de l'invention réside dans le fait qu'elle permet d'obtenir une auto-étanchéité sur les côtés latéraux des différents compartiments, c'est à dire une étanchéité de manière instantanée sans pose de joints. Elle permet également la compartimentation facile de cuves, nécessitant juste une insertion de cloisons préfabriquées par le haut de la cuve. L'utilisation de moyens de fixation est donc rendue superflue, ainsi que la descente d'opérateurs dans la cuve pour assurer la fixation. De cette manière, une meilleure sécurité est obtenue. De plus, l'intérêt de l'invention réside dans la simplicité et la rapidité du montage, ce qui est intéressant d'un point de vue économique.

On entend par étanchéité relative une étanchéité qui éventuellement n'est pas parfaite, mais qui est suffisante en vu d'une pression différentielle faible entre les différents compartiments, pour éviter de manière substantielle l'écoulement de l'eau par les endroits munis d'une telle étanchéité relative. En effet, dans les cuves d'épuration par exemple, l'eau est sensiblement au même niveau dans les différents compartiments et ainsi la pression différentielle entre les différents compartiments est faible.

La cuve compartimentée présente une paroi latérale périphérique, qui peut comprendre plusieurs segments, de sorte à ce que la cuve peut prendre diverses formes, notamment une forme rectangulaire, une forme ovale, une forme circulaire, etc... Il est évident que des rainures dans la paroi qui coopèrent avec une cloison sont disposées de manière opposée l'une à l'autre par rapport à la cloison.

Le nombre de cloisons à insérer dans la cuve est fonction du nombre souhaité de compartiments. Par ailleurs, la forme et les dimensions des cloisons sont déterminées par la forme et les dimensions de la cuve, ainsi que par la position de la cloison à l'intérieur de la cuve. Ainsi une cloison compartimentant une cuve rectangulaire en angle droit présente deux faces de largeur sensiblement identique, alors qu'une cloison compartimentant par exemple une cuve de forme ovale peut présenter deux faces de largeurs différentes.

L'homme du métier peut par ailleurs adapter le nombre de rainures ainsi que leur profondeur en fonction de l'utilisation visée. L'épaisseur de la paroi de la cuve et des cloisons dépendra notamment de la nature du matériau utilisé et de la rigidité de la compartimentation souhaitée ou nécessaire. En principe, l'épaisseur de la paroi de la cuve limite la profondeur des rainures, mais la paroi peut par exemple être plus épaisse au niveau des rainures. Il est également possible, par exemple dans le cas de matériaux de faible épaisseur, de former des rainures sur la paroi interne de cette cuve, par exemple par fixation d'un profilé sur la paroi.

Selon la matière utilisée pour la fabrication des cuves, l'homme du métier sait que la rainure peut éventuellement ne pas se prolonger exactement jusqu'au fond de la cuve. Ceci est le cas par exemple avec les cuves en béton. En effet, en raison de la technique de moulage, les cuves en béton ne présentent en général pas un angle droit entre la paroi et le fond de la cuve, mais plutôt un angle incliné. Dans ce cas-ci, les rainures peuvent se terminer au-dessus de cet angle incliné et l'homme du métier saura adapter les bords des cloisons à insérer en conséquence.

Les rainures peuvent présenter diverses sections, telles qu'une section rectangulaire, trapézoïde ou encore semi-cylindrique. L'angle entre le côté élargi de la rainure et la paroi interne de la cuve est donc variable, l'essentiel étant que la rainure se rétrécisse en forme sensiblement conique vers le bas de la cuve.

Une cloison dans le sens de la présente invention peut être une cloison simple présentant deux bords latéraux munis chacun d'un profilé en V de forme complémentaire à la rainure correspondante. Dans une autre variante avantageuse de l'invention, la cloison peut également former une cloison dite intégrée. On entend par cloison intégrée une cloison qui intègre au moins un compartiment. Ainsi la cloison intégrée, tout comme la cloison simple, présente deux bords latéraux avec un profilé en forme de V. L'avantage de la cloison intégrée réside dans le fait qu'elle permet d'obtenir au moins trois compartiments en un seul geste (alors qu'une cloison simple ne permet que d'obtenir deux compartiments). De plus, la cuve dans laquelle on insère la cloison intégrée doit présenter seulement deux rainures, renforçant ainsi sa rigidité. Une cloison intégrée peut intégrer plus d'un compartiment, et ces compartiments peuvent prendre toutes les formes appropriées à leur usage, par exemple rectangulaire, cylindrique, triangulaire etc.

Dans une autre variante avantageuse de l'invention, la cloison peut être une cloison dite complexe, c'est à dire présentant plus de deux bords latéraux, par exemple une cloison dont la base est en forme de croix, d'étoile etc. Tout comme pour les cloisons intégrées, l'avantage de des cloisons complexes est qu'il est possible de créer plus de deux compartiments en une seule opération. En revanche la cloison complexe présente plus de deux bords latéraux en forme de V. Elle peut également être formée en assemblant par exemple une ou plusieurs cloisons simples et/ou intégrées et/ou complexes par des moyens de fixation appropriés. Une cuve peut accueillir les différents types de cloisons (simple, complexe et intégré) séparément ou conjointement.

Les cloisons peuvent par ailleurs présenter des entailles, incisons, orifices, trous ou toute autre forme appropriée, afin de permettre par exemple l'écoulement des eaux à travers les différents compartiments ou l'aération. Les cloisons peuvent être pleines ou non pleines (par exemple creuses, moussées etc.) pour diminuer le poids et/ou le prix si les matériaux sont trop lourdes respectivement trop onéreuses. Des moyens de fixation peuvent également être présents sur les différents types de cloisons, par exemple pour le montage d'accessoires ou simplement pour l'installation de la cloison dans la cuve.

Au moins les bords latéraux des cloisons doivent présenter une forme complémentaire en V se rétrécissant vers le fond, ces bords formant ainsi un profilé débordant. Ce profilé peut être plus large ou plus étroit que le reste de la cloison. Il n'est cependant pas exclu que les cloisons entières puissent prendre cette forme en V.

La cloison peut être droite, mais l'homme du métier peut évidemment l'adapter selon l'utilisation de la cuve pour lui donner diverses formes par exemple une forme incurvée, ondulée, etc. et la cloison peut également être renforcée par des rainures, cannelures ou tout autre moyen de renforcement adapté. Il est également possible d'augmenter la rigidité de la cuve compartimentée par des moyens connus, par exemple par l'application de cannelures et d'autres structures, par le montage de profilés de renforcement, etc.

Conformément à l'invention, on entend par forme en V une forme sensiblement conique, se rétrécissant en ligne sensiblement droite vers le bas (les deux faces étant ainsi non parallèles), de sorte à pouvoir insérer un objet de forme complémentaire dans ce creux en forme de V. La forme en V peut donc se prolonger jusqu'au point où les deux faces du V se coupent pour se terminer en une extrémité pointue, mais elle peut également présenter une base tronquée.

Les bords latéraux des cloisons (ou la cloison entière) présentent une forme complémentaire aux rainures, c'est à dire une forme en V se rétrécissant vers le côté inférieur de la cloison, cette forme en V présentant le même angle d'ouverture α que les rainures.

La particularité de la présente invention réside donc dans la complémentarité entre les rainures et le bord des cloisons permettant d'obtenir une étanchéité relative entre ceux-ci par le blocage des bords des cloisons dans les rainures.

Dans une mode de réalisation préféré, la rainure en forme de V présente un angle d'ouverture α compris entre 0,1° et 10°, de préférence entre 0,2° et 5°, préférentiellement entre 1° et 4°, plus préférentiellement encore entre 2,5° à 3,5° et en particulier environ 3°. La bissectrice passant par cet angle d'ouverture α peut être verticale ou inclinée. En fonction du matériau utilisé et de ses tolérances de production, l'angle d'ouverture peut être adapté.

Contrairement au système de l'invention, des rainures en forme de U (c'est à dire présentant deux faces parallèles) ne permettent pas de résoudre le problème posé. En effet, la cloison une fois insérée dans les rainures serait fixée dans les rainures, mais l'ensemble ne serait pas étanche car la cloison ne se bloquerait pas dans les rainures. La pose préalable de joints dans ces rainures en forme de U ne permettrait pas non plus de résoudre le problème, car les joints seraient écrasés, arrachés ou décollés lors de l'introduction des cloisons. Dans ce cas de figure, la pose de joints doit donc se faire après le montage des cloisons, allongeant le temps de montage et le risque d'accidents. De plus, avec la forme en U, il est beaucoup plus important de respecter les tolérances de production du matériau utilisé afin de pouvoir insérer la cloison entre les deux faces parallèles de la rainure.

Dans un mode de réalisation particulier, le fond de la cuve et/ou le bord inférieur des cloisons présentent un ou plusieurs joints d'étanchéité préposés à des emplacements appropriés, de sorte à améliorer l'étanchéité entre le bas de la (des) cloison(s) emboîtée(s) dans les rainures et le fond de la cuve.

Ainsi, cette compartimentation permet d'avoir une étanchéité relative aussi bien entre la paroi de la cuve et le bord latéral de la cloison, qu'entre le bord horizontal inférieur de la (des) cloison(s) et le fond de la cuve.

Une autre variante prévoit la pose d'un ou de plusieurs joints d'étanchéité dans les rainures et/ou les bords latéraux des cloisons avant l'insertion des cloisons. Cette solution permet d'obtenir une meilleure étanchéité entre la paroi et les bords latéraux de la cloison, par exemple si la cloison doit supporter des différences de pression plus importantes ou si une étanchéité parfaite est souhaitée ou nécessaire. Comme discuté ci-dessus, la pose de joints au préalable, avant l'insertion des cloisons, ne serait pas possible avec une forme en U.

Tous ces joints peuvent être fabriqués en un matériau synthétique ou tout autre matériau approprié à l'usage, de préférence en un matériau inaltérable et/ou imputrescible, présentant la souplesse et la flexibilité nécessaire au but recherché et pouvant prendre diverses formes comme un bourrelet, une lame ou encore être sous forme d'une lèvre d'étanchéité. Les joints qui font saillie épouseront donc par compression la cloison, les rainures, respectivement le fond de la cuve, au moment de l'installation de la (des) cloison(s).

Dans un mode de réalisation avantageux, la cuve présente en outre des moyens de guidage sur la paroi de la cuve. Ils sont disposés des deux côtés élargis de la rainure et peuvent éventuellement se prolonger vers le bas de la cuve en longeant l'ouverture de la rainure. Dans le cas de rainures par fixation de profilés sur la paroi de la cuve, les moyens de guidage peuvent être disposés sur ces profilés en y faisant saillie. Ces moyens de guidage permettent une insertion plus facile des cloisons dans les rainures en aidant au centrage par exemple.

Avantageusement la cuve et les cloisons sont fabriquées en une matière inaltérable, comme le béton, le fibrociment, l'acier inoxydable et/ou les matières synthétiques imputrescibles, telles que le PVC, le polyéthylène haute densité, le polyéthylène, le polyester, le polypropylène, voire tout autre matériau adapté.

Une particularité de cette invention réside par ailleurs dans le fait que le(s) cloison(s) emboîtée(s) dans les rainures sont verrouillée(s) en position de manière instantanée et automatique.

Le montage est plus rapide comme aucune intervention supplémentaire est nécessaire pour fixer les cloisons. Par ailleurs, le risque d'accidents est considérablement réduit car, dès l'insertion des cloisons dans les rainures, le renversement de parois n'est plus possible.

Il est également possible d'y fixer directement des éléments ou accessoires (par exemple le lit biologique entre les cloisons) par soudage, boulonnage, vissage, collage ou toute autre méthode appropriée.

Dans un mode de réalisation particulier, la/les cloison(s) à insérer dans les rainures est (sont) choisie(s) parmi les cloisons simples et/ou complexes et/ou intégrées.

Le fait d'utiliser une cloison complexe et/ou intégrée telle que décrite ci-dessus permet de créer plus de deux compartiments en une seule opération avec une seule cloison. La cloison intégrée présente un avantage supplémentaire : elle permet de rendre la cuve d'autant plus rigide car celle-ci ne nécessite que deux rainures. La cassette intégrée peut en outre intégrer plus d'un compartiment, ces compartiments pouvant prendre diverses formes par exemple rectangulaire, triangulaire etc. Avec ce type de cassette, on peut donc augmenter le nombre de compartiments crées, tout en utilisant une cuve présentant deux rainures uniquement. La production de la cuve et la compartimentation sont donc davantage simplifiées.

Dans un mode de réalisation avantageux de l'invention, la cloison simple et/ou la cloison complexe et/ou la cloison intégrée forment une cassette, c'est à dire un module pré-équipé pour la réalisation de fonctions dans un compartiment. Il peut par exemple s'agir d'une cassette réacteur biologique formant un compartiment pour la dégradation biologique, composé par exemple d'une des cloisons décrites ci-dessus équipées d'un support pour micro-organismes, d'un système d'aération et/ou d'un système de bullage. La cassette peut également former une cassette de décantation formant un compartiment pour la décantation, composé d'une des cloisons décrites ci-dessus équipées d'un plan incliné par exemple pour faciliter la décantation.

Différentes variantes de cassettes réacteur biologique sont possibles : elles peuvent par exemple être composées du lit de réacteur fixé sur une cloison simple ou fixé au sein d'une cloison complexe. Elles peuvent également être composées d'un lit de réacteur placé dans une cloison intégrée telle que décrite précédemment. Le support du lit peut prendre différentes formes, par exemple tubulaire, sphérique, conique etc. Ces cassettes réacteur biologiques peuvent être assemblées avec une ou plusieurs cloisons simples et/ou une ou plusieurs cloisons complexes et/ou une ou plusieurs cloisons intégrées. Il est à noter cependant que la forme de la cassette réacteur biologique n'est critique que dans le sens où elle doit être appropriée pour l'utilisation prévue, et qu'elle doit permettre, par sa forme et ses dimensions, la compartimentation d'une cuve de taille et de forme déterminées.

De cette manière, le montage d'une station d'épuration pour eaux usées est facile et rapide. Cette cassette réacteur biologique, présentant des bords latéraux de forme complémentaires aux rainures, est fabriquée en atelier. Ainsi la cuve et la cassette compatible avec la cuve peuvent être livrées directement chez le client pour y être installées, rapidement et sans nécessiter d'outillage lourd sur place. Par ailleurs, si des entretiens ultérieurs sont nécessaires, la cassette est facilement amovible.

La cuve peut en outre présenter un couvercle. Il peut s'agir par exemple d'un double couvercle, c'est à dire un premier couvercle qui s'adapte à la forme de la cassette réacteur biologique. De cette façon, la cassette se laisse facilement retirer en cas de maintenance ou de remplacement par exemple. Ce premier couvercle présente un deuxième couvercle de taille plus restreinte formant la trappe de visite pour permettre les maintenances ou contrôles à l'intérieur par exemple.

Un aspect supplémentaire de la présente invention concerne une station d'épuration des eaux usées comprenant une cuve compartimentée telle que décrite ci-dessus.

Avantageusement, la cuve compartimentée telle que définie ci-dessus peut être utilisée pour le traitement des eaux usées.

Ainsi, on dispose d'une station d'épuration à assemblage simple, rapide et peu onéreux. En utilisant une cassette réacteur biologique pré-assemblée, la transformation en station d'épuration est d'autant plus simple et rapide.

Finalement la présente invention concerne une méthode de compartimentation pour obtenir des cuves compartimentées telles que décrites ci-dessus comprenant:
a) l'insertion de la/des cloison(s) présentant des bords latéraux en forme de V se rétrécissant vers le bord inférieur horizontal de la/des cloison(s) dans les rainures de forme complémentaire situées dans la paroi de la cuve, jusqu'à ce que la/les cloison(s) est/sont bloquée(s) dans les rainures;
   de manière à obtenir une étanchéité relative entre les bords latéraux de la/des cloison(s) et la paroi de la cuve, et éventuellement,
b) la pose optionnelle de joints avant l'étape a) dans le fond de la cuve à des emplacements appropriés et/ou sur la partie complémentaire des cloisons (càd le bord horizontal des cloisons) ; et/ou,
c) la pose optionnelle de joints dans les rainures et/ou sur la partie complémentaire des cloisons (càd les bords latéraux portant un profilé en forme de V) avant d'insérer celles-ci à l'étape a) ;
   de manière à obtenir une étanchéité supplémentaire entre le bord horizontal inférieur de la(des) cloison(s) et le fond de la cuve.

Les différents éléments sont donc livrés pré-assemblés chez le client et juste la/les cloison(s), respectivement la/les cassettes(s) insérées sur place. Les joints peuvent être posés en atelier ou sur place. Selon le poids des cloisons, on choisit le moyen approprié pour les insérer (par exemple une grue en cas de cloisons lourdes), le cas échéant elles peuvent être insérées à la main.

Les cuves compartimentées selon l'invention ne conviennent pas seulement pour le traitement des eaux usées, mais elles s'adaptent à tout autre usage où une compartimentation auto-étanche est nécessaire, comme par exemple la compartimentation de fosses sceptiques, séparateurs à graisses, séparateurs à hydrocarbures, débourbeur etc.

### Brève description des dessins

D'autres particularités et caractéristiques de l'invention ressortiront de la description détaillée de quelques modes de réalisation avantageux présentés ci-dessous, à titre d'illustration, en se référant aux dessins annexés. Ceux-ci montrent:
Fig 1 : vue de plan d'un exemple de réalisation de la cloison et d'une partie de cuve selon l'invention
Fig 2 : vue de profil d'un exemple de réalisation de cloison selon l'invention
Fig 3 : vue de face (grand côté) d'un exemple de réalisation de cloison selon l'invention
Fig 4 : vue de face (petit côté) d'un exemple de réalisation de cloison selon l'invention
Fig 5 : vues de profil d'un exemple de paroi de cuve avec rainure selon l'invention
Fig 6 : vue de profil d'un exemple de cloison intégrée selon l'invention

### Description d'exécutions préférées

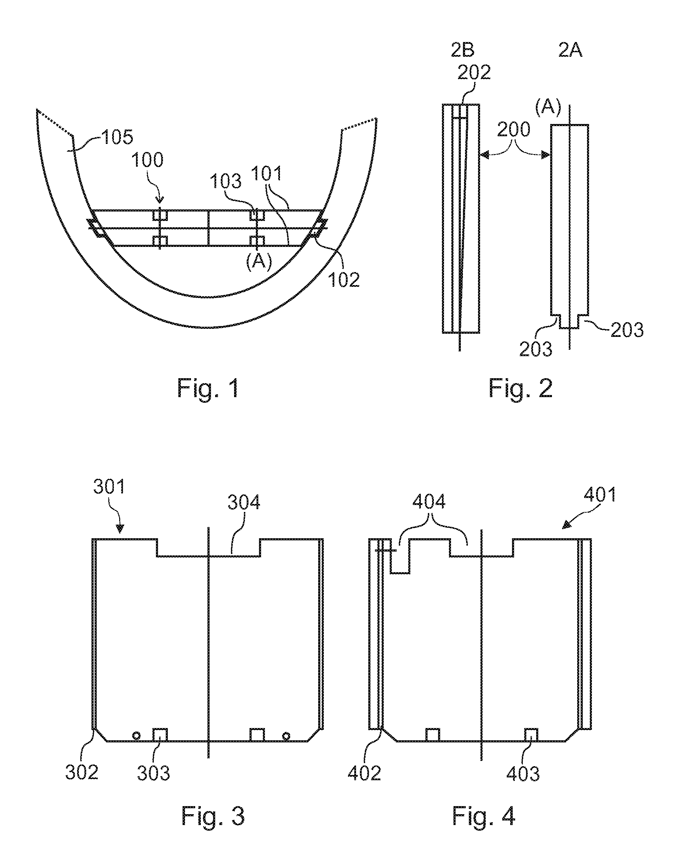

**La** **figure 1** présente une forme de réalisation de la présente invention montrant une cloison (100) et d'une partie de cuve (105) vu de haut. Les deux faces de la cloison (101) et les bords latéraux de la cloison (102) s'adaptent à la forme et aux dimensions de la cuve utilisée. Ainsi les deux faces de la cloison (101) peuvent présenter des largeurs différentes et les bords latéraux de la cloison (102) peuvent être inclinés. Les bords latéraux (102) des cloisons présentent une forme sensiblement en V. Dans cet exemple, ces bords forment ainsi un profilé latéral débordant, mais il n'est cependant pas exclu que la section de la cloison entière puisse prendre cette forme en V. La cloison peut donc comprendre différentes épaisseurs. Les bords latéraux tout comme le bord horizontal inférieur de la cloison peuvent comporter en outre un ou plusieurs joints d'étanchéité. Le bord inférieur horizontal de la cloison peut éventuellement être pourvu de creux (103) complémentaires à des saillies (non représentées) présentes dans le fond de la cuve.

**La** **figure 2A** présente plus en détail la section de la cloison (200) à l'endroit (A) de la figure 1 de la cloison telle que vue dans la figure 1. Des creux (203) sont visibles sur le bord horizontal inférieur.

**La** **figure 2B** présente une forme de réalisation de la présente invention montrant le bord latéral d'une cloison (202) présentant une forme sensiblement en V se rétrécissant vers le bas de la cuve (non représentée). La forme en V peut se terminer soit en une extrémité pointue, soit présenter un fond horizontal lorsqu'elle se termine en amont du point d'intersection des deux faces du V.

**La** **figure 3** présente la grande face de la cloison (301), le bord horizontal inférieur se terminant en angle incliné avec les bords latéraux (302). Selon la matière utilisée, les bords latéraux et le bord horizontal inférieur peuvent également se terminer en angle droit. Les creux (303) dans le bord inférieur horizontal de la cloison peuvent permettre d'épouser des éléments faisant saillie dans le fond de la cuve (non représentées) ou de fixer des accessoires. Une entaille (304) est représentée sur cette figure, mais il est évident que cette entaille peut être dans n'importe quel endroit approprié de la cloison et qu'elle peut prendre toute forme appropriée.

**La** **figure 4** présente la petite face de la cloison (401), le bord horizontal inférieur présentant des angles inclinés et des creux (403). La cloison (401) présente deux entailles (404) de formes différentes sur cette figure, et l'homme du métier saura adapter le nombre, l'emplacement et la forme de ces entailles selon l'utilisation.

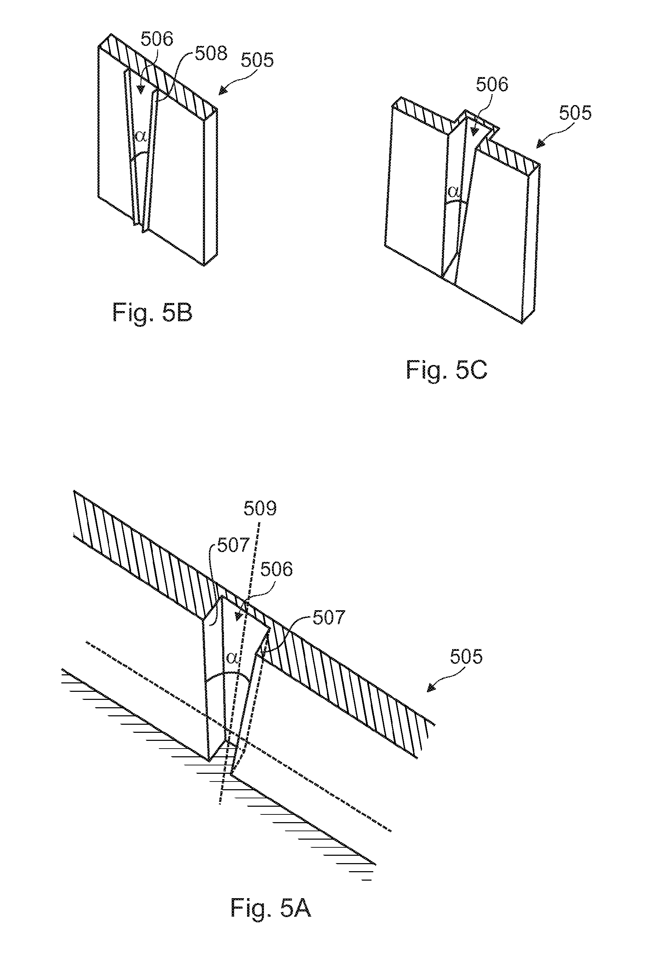

**La** **figure 5A** présente une forme de réalisation de la présente invention montrant une partie de la paroi d'une cuve (505) avec une rainure (506) de profil. La rainure présente une forme sensiblement en V, les deux faces du V (507) se rétrécissant vers la bas de la cuve (les deux faces étant ainsi non parallèles), de sorte à pouvoir insérer une cloison dont au moins les bords latéraux sont de forme complémentaire (100,200,300,400). La forme en V présente un fond sensiblement horizontal du côté rétréci, c'est à dire une base tronquée, mais il est également possible qu'elle présente une extrémité pointue. Les deux faces (507) de la rainure (506) sensiblement en forme de V forment un angle d'ouverture α compris entre 0,1° et 10°, la bissectrice (509) passant par cet angle pouvant être verticale ou bien inclinée.

**La** **figure 5B** présente une forme de réalisation de la présente invention montrant une partie de la paroi d'une cuve (505) avec une rainure (506). La cuve étant mince dans cet exemple-ci, la rainure (506) est formée en fixant deux ou plusieurs éléments (508) sur la paroi interne de la cuve de sorte à obtenir une forme en V. Ces éléments et leurs fixations sont fabriqués en tout matériau adapté à l'usage, comme par exemple le béton, le fibrociment, l'acier inoxydable le PVC, le polyéthylène haute densité, le polyéthylène, le polyester, le polypropylène, ou des combinaisons de ceux-ci.

**La** **figure 5C** présente une forme de réalisation particulière de la présente invention montrant une partie de la paroi d'une cuve (505) avec une rainure (506). Dans le cas de cuves minces par exemple, la paroi de la cuve peut être plus épaisse au niveau de la rainure (506).

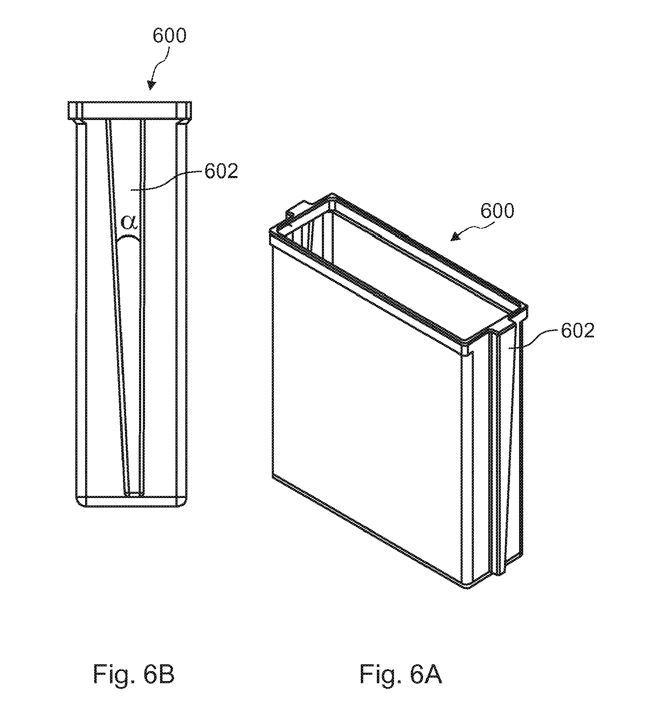

**La** **figure 6A** présente une forme de réalisation particulière de la présente invention montrant une cloison intégrée (600) présentant deux bords latéraux en forme de V formant un angle d'ouverture α. Cette cloison intégrée présente l'avantage qu'elle permet d'obtenir plus de deux compartiments. La cloison intégrée peut être pré-équipé et accueillir par exemple un lit biologique ou d'autres accessoires pour former un cassette réacteur biologique.

**La** **figure 6B** montre le bord latéral (602) de forme sensiblement en V d'une cloison intégrée (600). Dans cet exemple-ci, la forme en V présente une base tronquée, mais elle peut également se terminer en extrémité pointue. Il est aussi envisageable que le bord latéral entier présente la forme en V et coopère avec les rainures de forme complémentaire.

## Revendications

1. Cuve compartimentée dont la paroi présente au moins deux rainures sensiblement en forme de V se rétrécissant vers le fond de la cuve, lesdites rainures coopérant avec une ou plusieurs cloisons présentant des bords latéraux de forme complémentaire aux rainures et qui s'emboîtent dans lesdites rainures jusqu'au blocage des bords latéraux des cloisons dans les rainures, de sorte à obtenir une étanchéité relative entre la paroi de la cuve et la/les cloison(s).

2. Cuve selon la revendication 1 **caractérisée en ce que** la rainure en forme de V présente un angle d'ouverture α compris entre 0,1° et 10°, de préférence entre 1° et 4° et de manière particulièrement préférée environ 3°.

3. Cuve selon les revendications 1 ou 2, **caractérisée en ce que** le fond de la cuve et/ou le bord inférieur de la (des) cloison(s) présentent un ou plusieurs joints d'étanchéité préposés à des emplacements appropriés, de sorte à améliorer l'étanchéité entre le bord inférieur de la (des) cloison(s) emboîtée(s) dans les rainures et le fond de la cuve.

4. Cuve selon l'une quelconque des revendications précédentes, **caractérisée en ce que** les rainures et/ou les bords latéraux des cloisons et/ou les bords horizontaux inférieurs peuvent être pourvus de joints d'étanchéité préposés.

5. Cuve selon l'une quelconque des revendications précédentes, **caractérisée en ce qu'**en outre des moyens de guidage sont installés sur la paroi de la cuve, des deux côtés élargies des rainures.

6. Cuve selon l'une quelconque des revendications précédentes, **caractérisée en ce que** la cuve et/ou la/les cloison(s) est (sont) fabriquée(s) en béton, en acier inoxydable, en matière synthétique, et/ou une combinaison de ceux-ci.

7. Cuve selon l'une quelconque des revendications précédentes, **caractérisée en ce que** la/les cloison(s) sont choisies parmi les cloisons simples et/ou complexes et/ou intégrées.

8. Cuve selon la revendication précédente, **caractérisée en ce que** la/les cloison(s) forme(nt) une cassette réacteur biologique.

9. Station d'épuration des eaux usées comprenant une cuve compartimentée selon l'une quelconque des revendications précédentes.

10. Utilisation d'une cuve compartimentée selon les revendications 1 à 8 pour le traitement des eaux usées.

11. Méthode de compartimentation auto-étanche pour obtenir des cuves compartimentées dont la paroi présente des rainures sensiblement en forme de V se rétrécissant vers le fond de la cuve, et une ou plusieurs cloisons présentant des bords latéraux de forme complémentaire aux rainures, telles que décrites dans les revendications 1 à 8, ladite méthode comprenant:
a) l'insertion de la/des cloison(s) dans les rainures en forme de V situées dans la paroi de la cuve jusqu'au blocage des bords latéraux des cloisons dans les rainures,
de sorte à obtenir une étanchéité relative entre la paroi de la cuve et la/les cloison(s) ; et éventuellement,
b) la pose optionnelle, avant l'étape a), de joints dans le fond de la cuve à des emplacements appropriés et/ou sur le bord inférieur horizontal de la (des) cloison(s); et/ou ,
c) la pose optionnelle de joints dans les rainures et/ou sur la partie complémentaire de la (des) cloison(s) avant d'insérer celle(s)-ci à l'étape a) ;
de manière à obtenir une étanchéité supplémentaire entre le bord horizontal inférieur de la(des) cloison(s) et le fond de la cuve.
